# EUROPÄISCHE PATENTSCHRIFT

(11) **EP 0 915 772 B1**
(45) Veröffentlichungstag und Bekanntmachung des Hinweises auf die Patenterteilung: **17.10.2001**
(21) Anmeldenummer: 97938880.8
(22) Anmeldetag: 06.08.1997
(51) Int. Cl.: B60K 37/02

(54) **KOMBINATIONSINSTRUMENT**
COMBINATION INSTRUMENT
INSTRUMENT COMBINE

(30) Priorität: 10.08.1996 DE 19632381
(43) Veröffentlichungstag der Anmeldung: 19.05.1999
(73) Patentinhaber: Mannesmann VDO Aktiengesellschaft, 60388 Frankfurt am Main (DE)
(72) Erfinder: SIMON, Ernst-Ulrich, D-61440 Oberursel (DE); KOLIBIUS, Hans, D-64832 Babenhausen (DE); ZECH, Stephan, D-65343 Eltville (DE)
(74) Vertreter: Rassler, Andrea, Dipl.-Phys.
(86) Internationale Anmeldenummer: EP9704281
(87) Internationale Veröffentlichungsnummer: WO9806594

(56) Entgegenhaltungen:
- EP-A- 0 616 921
- EP-A- 0 645 276
- EP-A- 0 676 307

## Beschreibung

Die Erfindung betrifft ein Kombinationsinstrument für ein Kraftfahrzeug.

Aus EP-A1-0 676 307 ist ein Kombinationsinstrument gemäß dem Oberbegriff des Anspruchs 1 für ein Kraftfahrzeug bekannt, mit einem Frontrahmen und einer hinter dem Frontrahmen angeordneten Platine und mit einem zur Anzeige von Informationen auf einem Anzeigefeld vorgesehenen, mit der Platine kontaktierten Anzeigeinstrument und Kontrolleuchten, die auf auf der Platine befestigt sind, wobei zwischen den Kontrolleuchten und dem Anzeigefeld Lichtschächte angeordnet sind, der Frontrahmen eine vor dem Anzeigefeld angeordnete Sichtscheibe haltert und mit den Lichtschächten einteilig gefertigt ist. Dabei ist die Platine in in Form von Abstandshaltern ausgebildeten seitlichen Bereichen des Frontrahmens eingeklammert und das Anzeigefeld weist ein einzeln in den Frontrahmen eingesetztes Bildfenster auf. Die Montage dieses Kombinationsinstrumentes ist aufwendig, da das Anzeigeinstrument beidseitig des ein Gehäuse bildenden Frontrahmens zu montieren und das Bildfenster einzeln in das Gehäuse eingesetzt ist. Außerdem ist die Gehäusevorderseite für einen Betrachter unmittelbar sichtbar, so daß eine freie Gestaltung der einem Betrachter zugewandten Gehäuseseite nicht möglich ist. Ferner ist bei diesem Kombinationsinstrument nachteilig, daß das Anzeigeinstrument am Frontrahmen angebracht ist und dieser daher besonders steif ausgebildet sein muß.

Darüber hinaus ist in EP-A2-0 645 276 ein Kombinationsinstrument für ein Kraftfahrzeug mit einer Platine und mit zur Anzeige von Informationen auf einem Anzeigefeld vorgesehenen, auf der Platine befestigten und mit dieser kontaktierten Anzeigeinstrumenten und Kontrolleuchten, wobei zwischen den Kontrolleuchten und dem Anzeigefeld Lichtschächte angeordnet sind, offenbart, welches Kombinationsinstrument einen erheblich Bauraum beanspruchenden und die Bauteilanzahl erhöhenden Systemträger aufweist; dadurch ist das Kombinationsinstrument in der Herstellung aufwendig und kostenintensiv.

Außerdem sind in heutigen Kraftfahrzeugen vielfach eingesetzte Kombinationsinstrumente bekannt, bei denen zwischen dem Frontrahmen und der Platine ein Mittelgehäuse angeordnet ist, welches die Lichtschächte aufweist und einen vorgesehenen Abstand der Platine von dem Frontrahmen sicherstellt. Die Lichtschächte verhindern, daß die Kontrolleuchten Licht auf benachbarte Bereiche des Anzeigefeldes abstrahlen und sind beispielsweise von eingefärbten, durchscheinenden Kunststoffscheiben verdeckt.

Nachteilig bei dem bekannten Kombinationsinstrument ist, daß das Mittelgehäuse ein zusätzlich zu fertigendes und zu montierendes Bauteil darstellt. Hierdurch gestaltet sich das Kombinationsinstrument sehr kostenintensiv. Weiterhin benötigt das Mittelgehäuse relativ viel Bauraum, was zu einer großen Bautiefe des Kombinationsinstrumentes führt.

Der Erfindung liegt das Problem zugrunde, ein Kombinationsinstrument der eingangs genannten Art so zu gestalten, daß es möglichst einfach zu montieren und kostengünstig zu fertigen ist und eine besonders geringe Bautiefe hat.

Dieses Problem wird erfindungsgemäß gelöst durch ein Kombinationsinstrument gemäß Anspruch 1.

Durch diese Gestaltung wird bei dem erfindungsgemäßen Kombinationsinstrument kein separat zwischen der Platine und dem Frontrahmen zu montierendes Mittelgehäuse benötigt, wodurch es eine besonders geringe Bautiefe aufweist. Das Anzeigefeld ist abgesehen von dem Bereich der Anzeigeinstrumente mit einer Blende für die Kontrolleuchten verdeckt, so daß einzelne Kunststoffscheiben zum Verdecken der Lichtschächte nicht mehr benötigt werden. Da das erfindungsgemäße Kombinationsinstrument besonders wenige Bauteile hat, ist es sehr einfach und damit kostengünstig zu fertigen und zu montieren. Der Frontrahmen ist für einen Betrachter im Bereich der Blende und der Anzeigeinstrumente nicht zu sehen, so daß sich für ihn vielfältige Gestaltungsmöglichkeiten ergeben. Beispielsweise kann der Frontrahmen wannenförmig gestaltet sein oder zur Erhöhung seiner Stabilität eine Wabenstruktur aufweisen. Die Blende verdeckt im montierten Zustand des Kombinationsinstrumentes etwaige Kanten des Frontrahmens. Abstandshalter für die Platine sind nur an den Stellen des Frontrahmens erforderlich, an denen keine Lichtschächte vorhanden sind.

Die Blende läßt sich gemäß einer vorteilhaften Weiterbildung der Erfindung besonders einfach auf dem Frontrahmen befestigen, wenn sie auf dem Frontrahmen aufgeklebt ist.

Die Blende ist besonders dünn und gemäß einer anderen vorteilhaften Weiterbildung der Erfindung kostengünstig herstellbar, wenn sie von einer Folie gebildet ist.

Mit den Kontrolleuchten lassen sich auf dem Anzeigefeld gemäß einer anderen vorteilhaften Weiterbildung der Erfindung besonders vielfältige Informationen bei gleichen oder gleichartigen Kontrolleuchten grafisch darstellen, wenn die Blende eine Bedruckung mit Informationen kennzeichnenden Symbolen, Zeichen, Schriftzügen und/oder farbigen Feldern aufweist.

Die auf dem Anzeigefeld durch die Kontrolleuchten darstellbaren Informationen sind jeweils nur bei einem Betrieb der Kontrolleuchten zu erkennen, wenn die Blende eine dunkle Tönung hat und die Symbole, Zeichen, Schriftzüge und/oder farbigen Felder auf ihrer dem Frontrahmen zugewandten Seite und/oder auf ihrer dem Frontrahmen abgewandten Seite aufgedruckt sind. Hierdurch wird ein sogenannter Black-Panel-Effekt erzeugt.

Als Kontrolleuchten eignen sich insbesondere weißes Licht abstrahlende Glühlampen. Die Verwendung gleicher Kontrolleuchten führt zu einer weiteren Verringerung der Kosten für das Kombinationsinstrument.

Als besonders günstig erweist es sich, wenn für die Kontrolleuchten Lichtquellen Verwendung finden, die farbiges Licht abstrahlen. Hierfür eignen sich z. B farbige LEDs. Bei einem Einsatz farbiger Lichtquellen erübrigt sich in außerordenlich kostensparender Weise eine farbige Bedrukkung der zugehörigen Anzeigefelder auf der Blende.

Die Lichtschächte könnten zur Verbesserung der Lichtausbeute der Kontrolleuchten an ihren Innenseiten eine reflektierende Beschichtung aufweisen. Eine solche Beschichtung läßt sich gemäß einer anderen vorteilhaften Weiterbildung der Erfindung jedoch vermeiden, wenn der Frontrahmen aus einem lichtreflektierenden Material gefertigt ist.

Sehr vorteilhaft ist die Verwendung von, z. B. weißem, Kunststoff als Werkstoff für den Frontrahmen.

Der Frontrahmen ist gemäß einer anderen vorteilhaften Weiterbildung der Erfindung besonders kostengünstig aus Kunststoff im Spritzgießverfahren herzustellen, wenn er aus Polypropylen gefertigt ist.

Die Klebeverbindung zwischen dem aus Kunststoff gefertigten Frontrahmen und der Blende ist gemäß einer anderen vorteilhaften Weiterbildung der Erfindung besonders zuverlässig, wenn der Frontrahmen zumindest im Bereich der Blende mit einer Lackschicht versehen ist. Diese Lackschicht dient hierbei als Haftvermittler zwischen dem Klebstoff und dem Kunststoff des Frontrahmens.

Die Lackschicht erhöht gemäß einer anderen vorteilhaften Weiterbildung der Erfindung den Kontrast des Anzeigefeldes, wenn sie farbig, z. B schwarz, ist.

Eine geringe Ungenauigkeit der Ausrichtung der Blende auf dem Frontrahmen führt gemäß einer anderen vorteilhaften Weiterbildung der Erfindung nicht zu einer Überlappung der Ausnehmungen der Anzeigeinstrumente durch die Blende, wenn die Ausnehmungen der Anzeigeinstrumente in dem Frontrahmen und der Blende von einem Blendenring begrenzt sind.

Der Blendenring könnte beispielsweise einteilig mit der Blende ausgebildet sein und die Ausnehmungen des Frontrahmens umgreifen. Diese Gestaltung des Blendenrings erleichtert die Montage der Blende auf dem Frontrahmen, erhöht jedoch den Aufwand für die Fertigung der Blende. Der Blendenring führt nur zu einer unbedeutenden Erhöhung des Fertigungsaufwandes des erfindungsgemäßen Kombinationsinstrumentes wenn der Blendenring einteilig mit dem Frontrahmen gefertigt ist.

Der Blendenring ist gemäß einer anderen vorteilhaften Weiterbildung der Erfindung besonders einfach auf dem Frontrahmen zu montieren, wenn er in den Frontrahmen eingeklipst ist.

Der Blendenring erhöht gemäß einer anderen vorteilhaften Weiterbildung der Erfindung die Stabilität des Frontrahmens zusätzlich, wenn er in den Frontrahmen eingeklebt ist.

Der Blendenring wird gemäß einer vorteilhaften Weiterbildung der Erfindung bei der Montage automatisch in der Ausnehmung des Frontrahmens zentriert, wenn er aus einem warm- oder kaltverformbaren Material gefertigt ist und durch plastische Verformung in dem Frontrahmen befestigt ist.

Ungenauigkeiten in den Ausnehmungen des Frontrahmens und der Blende sind für einen Betrachter des Anzeigefeldes gemäß einer anderen vorteilhaften Weiterbildung der Erfindung nicht sichtbar, wenn der Blendenring einen umlaufenden, über den an die Ausnehmungen angrenzenden Bereich der Blende greifenden Rand hat. Hierdurch ist es möglich, die Ausnehmungen in der Blende größer zu gestalten als in dem Frontrahmen, wodurch eine exakte Ausrichtung der Blende gegenüber dem Frontrahmen nicht mehr erforderlich ist.

Die Anzeigeinstrumente werden gemäß einer anderen vorteilhaften Weiterbildung der Erfindung optisch hervorgehoben, wenn der Blendenring aus Metall gefertigt ist.

Der Blendenring hat ein geringes Gewicht und gestaltet sich gemäß einer anderen vorteilhaften Weiterbildung der Erfindung besonders kostengünstig, wenn er aus Kunststoff mit einer metallisierten oder lackierten Oberfläche gefertigt ist. Sehr einfach kann er aber auch rein aus Kunststoff gefertigt sein.

Von erheblichem wirtschaftlichen Vorteil ist es, wenn die Blendenringe der einzelnen Anzeigeinstrumente zusammenhängend, z. B über Stege verbunden, ausgeführt sind.

Die Anzeigeinstrumente in dem erfindungsgemäßen Kombinationsinstrument könnten beispielsweise von der Seite des Betrachters beleuchtet werden. Eine solche Auflichtbeleuchtung führt jedoch häufig zu unerwünschten Reflexionen. Die Anzeigeinstrumente des Kombinationsinstrumentes sind gemäß einer vorteilhaften Weiterbildung der Erfindung ohne Gefahr von Reflexionen zu beleuchten, wenn eine mit Lichtquellen versehene oder an Lichtführungen angrenzende Lichtleitplatte hinter einem in dem Frontrahmen eingesetzten, durchleuchtbaren Zifferblatt angeordnet ist.

Das erfindungsgemäße Kombinationsinstrument erlaubt vielfältige optische Gestaltungsmöglichkeiten, wenn die Wandung des Frontrahmens eine veränderliche Wandstärke hat. Durch diese Gestaltung des Frontrahmens können beispielsweise einzelne Anzeigeinstrumente zurückgesetzt oder hervorgehoben werden.

Häufig ist es erforderlich, in dem Kombinationsinstrument zusätzliche Informationen darzustellen. Dies erfolgt gemäß einer anderen vorteilhaften Weiterbildung der Erfindung einfach dadurch, daß das Zifferblatt und/oder der Frontrahmen eine Ausnehmung für einen Flachbildschirm, z. B. eine LCD-Anzeige, hat. Mittels eines solchen Flachbildschirms lassen sich vielfältige Warnhinweise in Textform darstellen.

Die Platine könnte beispielsweise mit dem Frontrahmen verschraubt oder verklipst werden. Da das Kombinationsinstrument jedoch häufig eine Rückwand aufweist, läßt sich eine separate Befestigung der Platine an dem Frontrahmen gemäß einer anderen vorteilhaften Weiterbildung der Erfindung vermeiden, wenn die Platine und das Zifferblatt zwischen dem Frontrahmen und der Rückwand eingespannt sind.

Das erfindungsgemäße Kombinationsinstrument läßt sich zur Montage ohne Einsatz von Werkzeug einfach zusammenstekken, wenn der Frontrahmen mit der Rückwand mit einer Klipsverbindung verbunden ist. Dies ermöglicht eine weitgehend automatisierte Montage des Kombinationsinstrumentes.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine Explosionsdarstellung eines erfindungsgemäßen Kombinationsinstrumentes,
- Fig. 2: eine Schnittdarstellung durch einen seitlichen Bereich des Kombinationsinstrumentes aus Figur 1,
- Fig.3 - 6: mehrere Ausführungsbeispiele eines Blendenrings,
- Fig. 7: eine schematische Darstellung einer weiteren Ausführungsform des Kombinationsins trumentes im Längsschnitt.

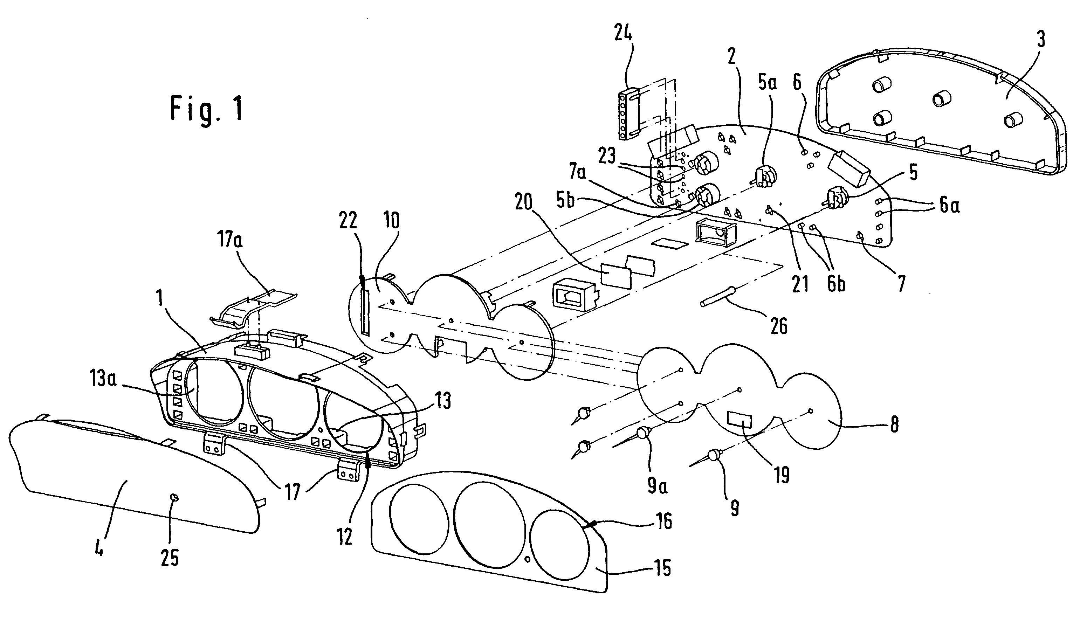

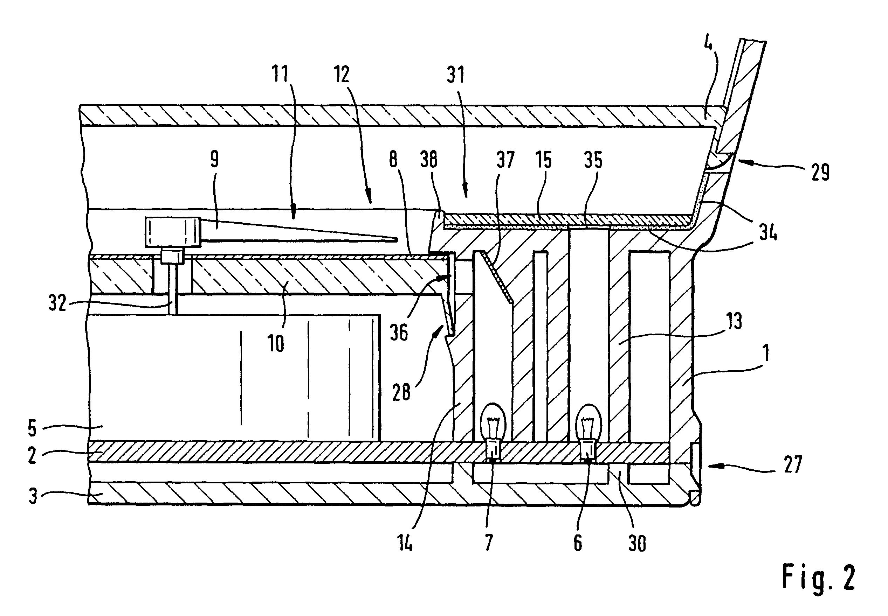

Die Figur 1 zeigt ein erfindungsgemäßes Kombinationsinstrument mit einem Frontrahmen 1, einer Platine 2 und einer Rückwand 3 vor der Montage. An der Vorderseite des Frontrahmens 1 läßt sich eine Sichtscheibe 4 einklipsen. Auf der Platine 2 sind mehrere Zeigerantriebssysteme 5, 5a, 5b, Kontrolleuchten 6, 6a, 6b und Glühlampen 7, 7a angeordnet. Die Zeigerantriebssysteme 5, 5a, 5b dienen zum Antrieb von im montierten Zustand des Kombinationsinstrumentes über ein Zifferblatt 8 schwenkbaren Zeigern 9, 9a. Das Zifferblatt 8 ist aus einem durchscheinenden Material gefertigt und zur Befestigung auf einer von den Glühlampen 7 durchleuchtbaren Lichtleitplatte 10 vorgesehen. Die Zeigerantri ebssysteme 5, 5a, 5b bilden mit den Zeigern 9, 9a und dem Zifferblatt 8 jeweils ein in Figur 2 dargestelltes Anzeigeinstrument 11.

Der Frontrahmen 1 hat mehrere Ausnehmungen 12 für die Anzeigeinstrumente 11 und ist einteilig mit Lichtschächten 13, 13a für die Kontrolleuchten 6, 6a, 6b und in Figur 2 dargestellten Lichtführungen 14 für die Glühlampen 7, 7a gefertigt. Die Vorderseite des Frontrahmens 1 dient der Befestigung einer Blende 15. Diese Blende 15 hat, wie der Frontrahmen 1, weitere Ausnehmungen 16 für Anzeigeinstrumente 11 und verdeckt im montierten Zustand die Lichtschächte 13, 13a der Kontrolleuchten 6, 6a, 6b. Weiterhin hat der Frontrahmen 1 mehrere Halteteile 17, 17a zur Befestigung des Kombinationsinstrumentes in einer nicht dargestellten Armaturentafel eines Kraftfahrzeuges. Die elektrische Verbindung des Kombinations instrumentes mit dem Kraftfahrzeug erfolgt mittels auf der Platine 2 angeordneter Steckkontakte.

Das Zifferblatt 8 und die Lichtleitplatte 10 haben jeweils eine Ausnehmung 19 für einen auf der Platine 2 zu befestigenden Flachbildschirm 20. Ein solcher Flachbildschirm 20 wird häufig für zusätzliche Hinweise benötigt, die einem Betrachter in Textform dargestellt werden. Der Flachbildschirm 20 hat zu seiner Durchleuchtung eine eigene Glühlampe 21. Weiterhin hat die Lichtleitplatte 10 eine weitere Ausnehmung 22, durch welche sich zusätzliche Informationen von einer Reihe auf der Platine 2 angeordneten Leuchtdioden 23 auf das Zifferblatt 8 projizieren lassen. Für diese Projektion erforderliche Lichtschächte 24 sind zur Montage auf der Platine 2 vorgesehen. Eine in dem Frontrahmen 1 und der Sichtscheibe 4 eingearbeitete Bohrung 25 dient zur Durchführung eines Bedienelementes 26 zum Rückstellen eines Tageskilometerzählers.

Ein seitlicher Bereich des Kombinationsinstrumentes aus Figur 1 ist in Figur 2 im montierten Zustand im Schnitt dargestellt. Hierbei sind die Rückwand 3, die Sichtscheibe 4 und die Lichtleitplatte 10 in dem Frontrahmen 1 mittels Klipsverbindungen 27 - 29 befestigt. Die Platine 2 liegt an den Lichtschächten 13 des Frontrahmens 1 sowie an Stegen 30 der Rückwand 3 an und ist damit zwischen dem Frontrahmen 1 und der Rückwand 3 eingespannt. Die Blende 15 und das Zifferblatt 8 bilden zusammen ein Anzeigefeld 31.

Eine Zeigerwelle 32 eines der auf der Platine 2 befestigten und mit ihr kontaktierten Zeigerantriebssysteme 5 durchdringt die Lichtleitplatte 10 und das Zifferblatt 8. Der Zeiger 9 kann dadurch über das Zifferblatt 8 geschwenkt werden. Die der Sichtscheibe 4 zugewandte Seite des Frontrahmens 1 ist mit einer schwarzen Lackschicht 34 versehen. Auf dieser Lackschicht 34 ist die als Folie gefertigte Blende 15 aufgeklebt. Die Lackschicht 34 dient damit als Haftvermittler zwischen dem vorzugsweise aus Polypropylen gefertigten Frontrahmen 1 und der Blende 15. Die Ausnehmung 12 für das Anzeigeinstrument 11 ist von einem Blendenring 38 begrenzt.

In der Figur 2 ist stellvertretend für die Kontrolleuchten 6, 6a, 6b aus Figur 1 eine einzige Kontrolleuchte 6 in einem der Lichtschächte 13 zur Durchleuchtung der Blende 15 eingezeichnet. Die Blende 15 hat auf ihrer der Kontrolleuchte 6 zugewandten Seite eine farbige Bedrukkung 35 mit Symbolen oder Zeichen und ist ansonsten zur Erzeugung eines Black-Panel-Effekts dunkel getönt. Bei ausgeschalteter Kontrolleuchte 6 erscheint damit die Blende 15 gleichmäßig dunkel. Erst bei einem Einschalten der Kontrolleuchte 6 sind die Symbole oder Zeichen zu erkennen und heben sich farblich von ihrer Umgebung ab. Die Glühlampe 7 dient der Einkoppelung von Licht in die Lichtleitplatte 10 und damit der Durchleuchtung des Zifferblattes 8. Die Lichtführung 14 der Glühlampe 7 hat im Bereich der Lichtleitplatte 10 eine Öffnung 36 und dieser gegenüberliegend eine Reflexionsschicht 37, über die das Licht der Glühlampe 7 seitlich auf die Lichtleitplatte 10 reflektiert wird.

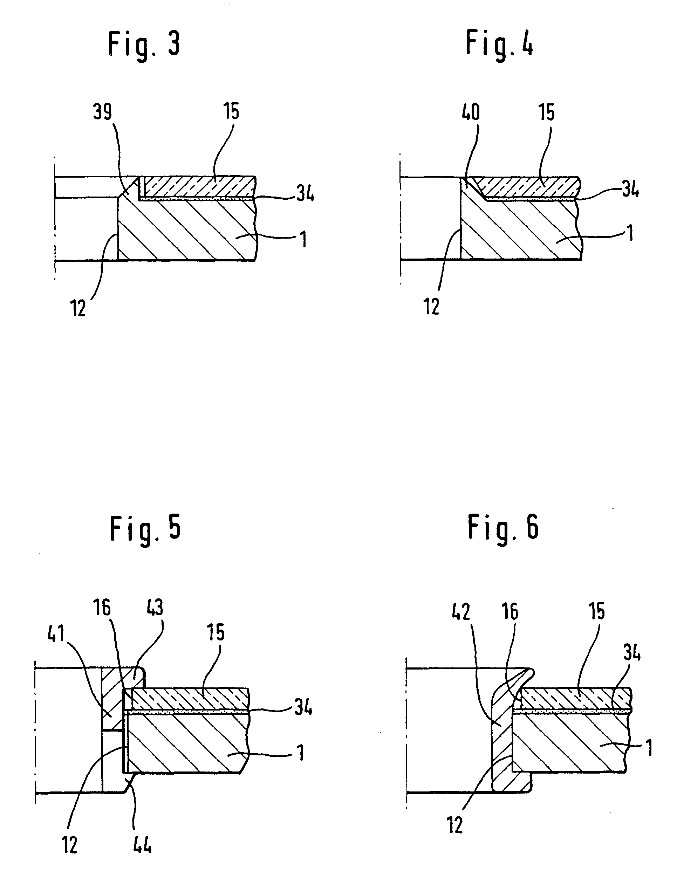

Die Figuren 3 und 4 zeigen jeweils einen einteilig mit dem Frontrahmen 1 gefertigten Blendenring 39, 40. Der Blendenring 39 in Figur 3 ist in Richtung der Ausnehmung 12 angefast. Hierdurch wird das in Figur 2 dargestellte Anzeigeinstrument 11 optisch hervorgehoben. Der Blendenring 40 aus Figur 4 ist im Vergleich zu dem Blendenring 39 aus Figur 3 in die entgegengesetzte Richtung angefast. Hierdurch wird die Montage der Blende 15 auf dem Frontrahmen 1 erleichtert.

Die Figur 5 zeigt einen Blendenring 41, der nach einer Montage der Blende 15 auf dem Frontrahmen 1 in die Ausnehmung 12 eingesetzt ist. Der Blendenring 41 hat an seinem der Blende 15 zugewandten Ende einen umlaufenden Rand 43, der den an die Ausnehmung 12 angrenzenden Bereich der Blende 15 umgreift. Ungenauigkeiten der Ausnehmungen 12, 16 in dem Frontrahmen 1 und der Blende 15 sind hierdurch von dem Rand 43 verdeckt. An seinem dem Rand 43 abgewandten Ende hat der Blendenring 41 einen federnden hakenförmigen, den Frontrahmen 1 hintergreifenden Rastkörper 44. Hierdurch ist der Blendenring 41 formschlüssig in den Ausnehmungen 12, 16 gehalten.

In Figur 6 ist ein aus einem warm- oder kaltverformbaren Material gefertigter Blendenring 42 dargestellt, der nach dem Einsetzen in die Ausnehmungen 12, 16 plastisch verformt wurde. Der Blendenring 42 wird während der plastischen Verformung in den Ausnehmungen 12, 16 zentriert.

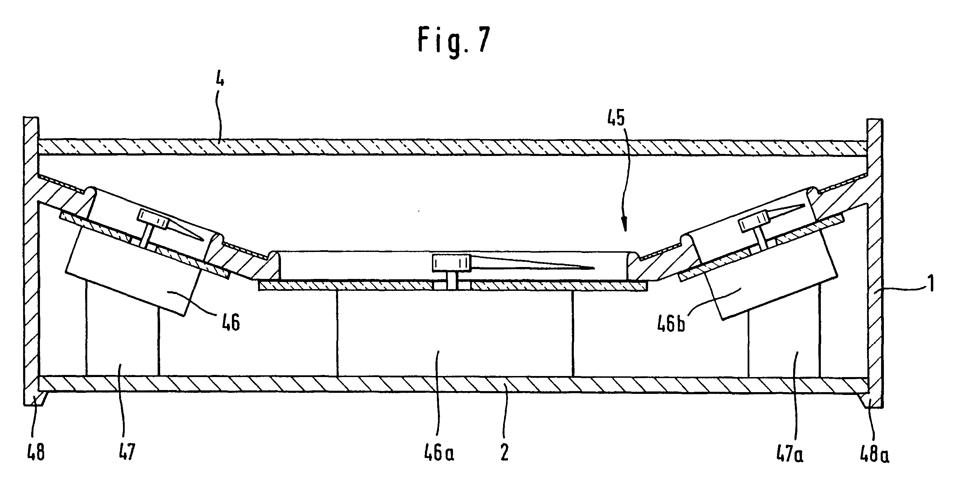

Die Figur 7 zeigt ein Kombinationsinstrument in einer Schnittdarstellung mit einem wannenförmigen Anzeigefeld 45. Mehrere Zeigerantriebssysteme 46, 46a, 46b sind hierbei auf sich an der Platine 2 abstützenden Halteteilen 47, 47a befestigt. Die Platine 2 ist mittels Rastkörpern 48, 48a in dem Frontrahmen 1 gehalten. Zur Vereinfachung der Zeichnung sind die Lichtschächte 13 und die Lichtführungen 14 aus Figur 2 nicht eingezeichnet.

## Patentansprüche

1. Kombinationsinstrument für ein Kraftfahrzeug mit einem Frontrahmen (1) und einer hinter dem Frontrahmen (1) angeordneten Platine (2) und mit zur Anzeige von Informationen auf einem Anzeigefeld (31, 45) vorgesehenen, mit der Platine (2) kontaktierten Anzeigeinstrumenten (11) und Kontrolleuchten (6), welche Kontrolleuchten (6) auf der Platine (2) befestigt sind, wobei zwischen den Kontrolleuchten (6) und dem Anzeigefeld (31, 45) Lichtschächte (13) angeordnet sind, der Frontrahmen (1) Ausnehmungen (12) für die Anzeigeinstrumente (11) hat und eine vor dem Anzeigefeld (31, 45) angeordnete Sichtscheibe (4) haltert und wobei der Frontrahmen (1) mit den Lichtschächten (13) einteilig gefertigt ist, **dadurch gekennzeichnet, daß** die Anzeigeinstrumente (11) auf der Platine (2) befestigt sind, daß das Anzeigefeld (31, 45) von einer auf dem Frontrahmen (1) befestigten, weitere Ausnehmungen (16) für die Anzeigeinstrumente (11) aufweisenden, durchscheinenden Blende (15) gebildet ist und die Platine (2) an den Lichtschächten (13) des Frontrahmens (1) anliegt.

2. Kombinationsinstrument nach Anspruch 1, **dadurch gekennzeichnet, daß** die Blende (15) auf dem Frontrahmen (1) aufgeklebt ist.

3. Kombinationsinstrument nach Anspruch 1 oder 2, **dadurch gekennzeichnet, daß** die Blende (15) von einer Folie gebildet ist.

4. Kombinationsinstrument nach zumindest einem der vorhergehenden Ansprüche, **dadurch gekennzeichnet, daß** die Blende (15) eine Bedruckung (35) mit Informationen kennzeichnenden Symbolen, Zeichen, Schriftzügen und/oder farbigen Feldern aufweist.

5. Kombinationsinstrument nach zumindest einem der vorhergehenden Ansprüche, **dadurch gekennzeichnet, daß** die Blende (15) eine dunkle Tönung hat und die Symbole, Zeichen, Schriftzüge und/oder farbigen Felder auf ihrer dem Frontrahmen (1) zugewandten Seite und/oder auf ihrer dem Frontrahmen (1) abgewandten Seite aufgedruckt sind.

6. Kombinationsinstrument nach zumindest einem der vorhergehenden Ansprüche, **dadurch gekennzeichnet, daß** die Kontrolleuchten von Lichtquellen, z. B. Glühlampen, gebildet werden, die weißes Licht abstahlen.

7. Kombinationsinstrument nach zumindest einem der vorhergehenden Ansprüche, **dadurch gekennzeichnet, daß** die Kontrolleuchten von Lichtquellen, z. B. LEDs, gebildet werden, die farbiges Licht abstrahlen.

8. Kombinationsinstrument nach zumindest einem der vorhergehenden Ansprüche, **dadurch gekennzeichnet, daß** der Frontrahmen (1) aus einem lichtreflektierenden Material gefertigt ist.

9. Kombinationsinstrument nach zumindest einem der vorhergehenden Ansprüche, **dadurch gekennzeichnet, daß** der Frontrahmen (1) aus, z. B. weißem, Kunststoff gefertigt ist.

10. Kombinationsinstrument nach zumindest einem der vorhergehenden Ansprüche, **dadurch gekennzeichnet, daß** der Frontrahmen (1) aus Polypropylen gefertigt ist.

11. Kombinationsinstrument nach zumindest einem der vorhergehenden Ansprüche, **dadurch gekennzeichnet, daß** der Frontrahmen (1) zumindest im Bereich der Blende (15) mit einer Lackschicht (34) versehen ist.

12. Kombinations instrument nach Anspruch 11, **dadurch gekennzeichnet, daß** die Lackschicht (34) farbig, z. B. schwarz, ist.

13. Kombinations instrument nach zumindest einem der vorhergehenden Ansprüche, **dadurch gekennzeichnet, daß** die Ausnehmungen (12, 16) der Anzeigeinstrumente (11) in dem Frontrahmen (1) und der Blende (15) von einem Blendenring (38 - 42) begrenzt sind.

14. Kombinationsinstrument nach Anspruch 13, **dadurch gekennzeichnet, daß** der Blendenring (38 - 42) einteilig mit dem Frontrahmen (1) gefertigt ist.

15. Kombinationsinstrument nach Anspruch 13 oder 14, **dadurch gekennzeichnet, daß** der Blendenring (41) in den Frontrahmen (1) eingeklipst ist.

16. Kombinationsinstrument nach zumindest einem der vorhergehenden Ansprüche, **dadurch gekennzeichnet, daß** der Blendenring (38 - 42) in den Frontrahmen (1) eingeklebt ist.

17. Kombinationsinstrument nach zumindest einem der vorhergehenden Ansprüche, **dadurch gekennzeichnet, daß** der Blendenring (42) aus einem warm- oder kaltverformbaren Material gefertigt ist und durch plastische Verformung in dem Frontrahmen (1) befestigt ist.

18. Kombinationsinstrument nach zumindest einem der vorhergehenden Ansprüche, **dadurch gekennzeichnet, daß** der Blendenring (41) einen umlaufenden, über den an die Ausnehmungen (12, 19) angrenzenden Bereich der Blende (15) greifenden Rand (43) hat.

19. Kombinationsinstrument nach zumindest einem der vorhergehenden Ansprüche, **dadurch gekennzeichnet, daß** der Blendenring (38 - 42) aus Metall gefertigt ist.

20. Kombinationsinstrument nach zumindest einem der vorhergehenden Ansprüche, **dadurch gekennzeichnet, daß** der Blendring (38 - 42) aus Kunststoff gefertigt ist.

21. Kombinationsinstrument nach zumindest einem der vorhergehenden Ansprüche, **dadurch gekennzeichnet, daß** der Blendenring (38 - 42) aus Kunststoff mit einer metallisierten oder lackierten Oberfläche gefertigt ist.

22. Kombinationsinstrument nach zumindest einem der Ansprüche 13 bis 21, **dadurch gekennzeichnet, daß** die die Ausnehmungen (12, 16) jeweils begrenzenden Blendenringe (38 - 42) zusammenhängend, z. B über Stege verbunden, ausgeführt sind.

23. Kombinationsinstrument nach zumindest einem der vorhergehenden Ansprüche, **dadurch gekennzeichnet, daß** eine mit Lichtquellen (Glühlampe 7) versehene oder an Lichtführungen (14) angrenzende Lichtleitplatte (10) hinter einem in dem Frontrahmen (1) eingesetzten, durchleuchtbaren Zifferblatt (15) angeordnet ist.

24. Kombinationsinstrument nach zumindest einem der vorhergehenden Ansprüche, **dadurch gekennzeichnet, daß** die Wandung des Frontrahmens (1) eine veränderliche Wandstärke hat.

25. Kombinationsinstrument nach zumindest einem der vorhergehenden Ansprüche, **dadurch gekennzeichnet, daß** das Zifferblatt (8) und/oder der Frontrahmen (1) eine Ausnehmung (22) für einen Flachbildschirm (20), z. B eine LCD-Anzeige, hat.

26. Kombinations instrument mit einer Rückwand nach zumindest einem der vorhergehenden Ansprüche, **dadurch gekennzeichnet, daß** die Platine (2) zwischen dem Frontrahmen (1) und einer Rückwand (3) eingespannt ist.

27. Kombinationsinstrument nach Anspruch 25, **dadurch gekennzeichnet, daß** der Frontrahmen (1) mit der Rückwand (3) mittels einer Klips verbindung (27) verbunden ist.

28. Kombinationsinstrument nach zumindest einem der vorhergehenden Ansprüche, **dadurch gekennzeichnet, daß** die Platine (2) zusätzlich an Abstandshaltern des Frontrahmens (1) anliegt.

29. Kombinationsinstrument nach zumindest einem der vorhergehenden Ansprüche, **dadurch gekennzeichnet, daß** die Anzeigeinstrumente (11) Zeigerantriebssysteme (5, 5a, 5b) und Zeiger(9, 9a) aufweisen.

## Claims

1. Combination instrument for a motor vehicle, having a front frame (1) and a printed circuit board (2) arranged behind the front frame (1), and having display instruments (11) and warning lights (6) which are provided for displaying information on a display panel (31, 45), said warning lights (6) being attached to the printed circuit board (2), and are in electrical contact with the printed circuit board (2), light shafts (13) being arranged between the warning lights (6) and the display panel (31, 45), and the front frame (1) having cutouts (12) for the display instruments (11) and holding a viewing window (4) which is arranged in front of the display panel (31, 45), and the front frame (1) being produced integrally with the light shafts (13), **characterized in that** the display instruments (11) are attached to the printed circuit board (2), **in that** the display panel (31, 45) is formed by a transparent diaphragm screen (15) which is attached to the front frame (1) and has further cutouts (16) for the display instruments (11), and the printed circuit board (2) bears against the light shafts (13) of the front frame (1).

2. Combination instrument according to Claim 1, **characterized in that** the diaphragm screen (15) is adhesively bonded to the front frame (1).

3. Combination instrument according to Claim 1 or 2, **characterized in that** the diaphragm screen (15) is formed by a film.

4. Combination instrument according to at least one of the preceding claims, **characterized in that** the diaphragm screen (15) is printed (35) with symbols, markings, lettering and/or coloured panels which represent information.

5. Combination instrument according to at least one of the preceding claims, **characterized in that** the diaphragm screen (15) has a dark hue and the symbols, markings, lettering and/or coloured panels are printed on their side facing toward the front frame (1) and/or on their side facing away from the front frame (1).

6. Combination instrument according to at least one of the preceding claims, **characterized in that** the warning lights are formed by light sources, e.g. incandescent bulbs, which emit white light.

7. Combination instrument according to at least one of the preceding claims, **characterized in that** the warning lights are formed by light sources, e.g. LEDs, which emit coloured light.

8. Combination instrument according to at least one of the preceding claims, **characterized in that** the front frame (1) is made from a light-reflecting material.

9. Combination instrument according to at least one of the preceding claims, **characterized in that** the front frame (1) is made from, e.g. white, plastic.

10. Combination instrument according to at least one of the preceding claims, **characterized in that** the front frame (1) is made from polypropylene.

11. Combination instrument according to at least one of the preceding claims, **characterized in that** the front frame (1) is provided, at least in the region of the diaphragm screen (15), with a layer of paint (34).

12. Combination instrument according to Claim 11, **characterized in that** the layer of paint (34) is coloured, e.g. black.

13. Combination instrument according to at least one of the preceding claims, **characterized in that** the cutouts (12, 16) for the display instruments (11) in the front frame (1) and the diaphragm screen (15) are delimited by a diaphragm-screen ring (38-42).

14. Combination instrument according to Claim 13, **characterized in that** the diaphragm-screen ring (38-42) is produced integrally with the front frame (1).

15. Combination instrument according to Claim 13 or 14, **characterized in that** the diaphragm-screen ring (41) is clipped into the front frame (1).

16. Combination instrument according to at least one of the preceding claims, **characterized in that** the diaphragm-screen ring (38-42) is adhesively bonded into the front frame (1).

17. Combination instrument according to at least one of the preceding claims, **characterized in that** the diaphragm-screen ring (42) is made from a hot-formable or cold-formable material and is secured in the front frame (1) by plastic deformation.

18. Combination instrument according to at least one of the preceding claims, **characterized in that** the diaphragm-screen ring (41) has an encircling edge (43) which engages over that area of the diaphragm screen (15) which adjoins the cutouts (12, 19).

19. Combination instrument according to at least one of the preceding claims, **characterized in that** the diaphragm-screen ring (38-42) is made from metal.

20. Combination instrument according to at least one of the preceding claims, **characterized in that** the diaphragm-screen ring (38-42) is made from plastic.

21. Combination instrument according to at least one of the preceding claims, **characterized in that** the diaphragm-screen ring (38-42) is made from plastic and has a metal-coated or painted surface.

22. Combination instrument according to at least one of Claims 13 to 21, **characterized in that** the diaphragm-screen rings (38-42) which in each case delimit the cutouts (12, 16) are designed as a unit, for example are connected via webs.

23. Combination instrument according to at least one of the preceding claims, **characterized in that** an optical conductor plate (10), which is provided with light sources (incandescent bulb 7) or adjoins light guides (14), is arranged behind a transilluminatable dial (15) which is fitted in the front frame (1).

24. Combination instrument according to at least one of the preceding claims, **characterized in that** the wall of the front frame (1) has a variable wall thickness.

25. Combination instrument according to at least one of the preceding claims, **characterized in that** the dial (8) and/or the front frame (1) has a cutout (22) for a flat screen (20), e.g. an LCD display.

26. Combination instrument with a rear wall according to at least one of the preceding claims, **characterized in that** the printed circuit board (2) is clamped between the front frame (1) and a rear wall (3).

27. Combination instrument according to Claim 25, **characterized in that** the front frame (1) is connected to the rear wall (3) by means of a clip-in connection (27).

28. Combination instrument according to at least one of the preceding claims, **characterized in that** the printed circuit board (2) additionally bears against spacers of the front frame (1).

29. Combination instrument according to at least one of the preceding claims, **characterized in that** the display instruments (11) have pointer drive systems (5, 5a, 5b) and pointers (9, 9a).

## Revendications

1. Bloc d'instruments pour un véhicule à moteur avec un cadre avant (1) et une platine (2) disposée derrière le cadre avant (1) et avec des instruments d'affichage (11) et des témoins lumineux (6) montés sur la platine (2) et prévus pour l'affichage d'informations sur un tableau de bord (31, 45), témoins lumineux (6) qui sont fixés sur la platine (2), dans lequel des puits de lumière (13) sont disposés entre les témoins lumineux (6) et le tableau de bord (31, 45), le cadre avant (1) comporte des creux (12) pour les instruments d'affichage (11) et maintient une feuille transparente (4) disposée devant le tableau de bord (31, 45) et dans lequel le cadre avant (1) est fabriqué en une seule pièce avec les puits de lumière (13), **caractérisé en ce que** les instruments d'affichage (11) sont fixés sur la platine (2), **en ce que** le tableau de bord (31, 45) est formé par un écran transparent (15) fixé sur le cadre avant (1) et présentant d'autres creux (16) pour les instruments d'affichage (11) et **en ce que** la platine (2) est appliquée sur les puits de lumière (13) du cadre avant (1).

2. Bloc d'instruments suivant la revendication 1, **caractérisé en ce que** l'écran (15) est fixé sur le cadre avant (1).

3. Bloc d'instruments suivant la revendication 1 ou 2, **caractérisé en ce que** l'écran (15) est formé par une pellicule.

4. Bloc d'instruments suivant au moins l'une des revendications précédentes, **caractérisé en ce que** l'écran (15) présente une impression (35) avec des symboles, des signes, des mentions écrites et/ou des zones colorées définissant des informations.

5. Bloc d'instruments suivant au moins l'une des revendications précédentes, **caractérisé en ce que** l'écran (15) est de teinte sombre et les symboles, les signes, les mentions écrites et/ou les zones colorées sont imprimés sur sa face tournée vers le cadre avant (1) et/ou sur sa face située à l'opposé du cadre avant (1).

6. Bloc d'instruments suivant au moins l'une des revendications précédentes, **caractérisé en ce que** les témoins lumineux sont formés par des sources de lumière, par exemple des lampes à incandescence, qui émettent une lumière blanche.

7. Bloc d'instruments suivant au moins l'une des revendications précédentes, **caractérisé en ce que** les témoins lumineux sont formés par des sources de lumière, par exemple des DEL, qui émettent une lumière de couleur.

8. Bloc d'instruments suivant au moins l'une des revendications précédentes, **caractérisé en ce que** le cadre avant (1) est fabriqué en une matière réfléchissant la lumière.

9. Bloc d'instruments suivant au moins l'une des revendications précédentes, **caractérisé en ce que** le cadre avant (1) est fabriqué en matière synthétique, par exemple blanche.

10. Bloc d'instruments suivant au moins l'une des revendications précédentes, **caractérisé en ce que** le cadre avant (1) est fabriqué en polypropylène.

11. Bloc d instruments suivant au moins l'une des revendications précédentes, **caractérisé en ce que** le cadre avant (1) est pourvu d'une couche de laque (34) au moins dans la région de l'écran (15).

12. Bloc d'instruments suivant la revendication 11, **caractérisé en ce que** la couche de laque (34) est colorée, par exemple noire.

13. Bloc d'instruments suivant au moins l'une des revendications précédentes, **caractérisé en ce que** les creux (12, 16) des instruments d'affichage (11) dans le cadre avant (1) et dans l'écran (15) sont délimités par un cercle d'écran (38 - 42).

14. Bloc d'instruments suivant la revendication 13, **caractérisé en ce que** le cercle d'écran (38 - 42) est fabriqué d'une pièce avec le cadre avant (1).

15. Bloc d'instruments suivant la revendication 13 ou 14, **caractérisé en ce que** le cercle d'écran (41) est clippé dans le cadre avant (1).

16. Bloc d'instruments suivant au moins l'une des revendications précédentes, **caractérisé en ce que** le cercle d'écran (38 - 42) est collé dans le cadre avant (1).

17. Bloc d'instruments suivant au moins l'une des revendications précédentes, **caractérisé en ce que** le cercle d'écran (42) est fabriqué en une matière déformable à chaud ou à froid et est fixé dans le cadre avant (1) par déformation plastique.

18. Bloc d'instruments suivant au moins l'une des revendications précédentes, **caractérisé en ce que** le cercle d'écran (41) présente un rebord (43) s'accrochant sur la région de l'écran (15) contiguë aux creux (12, 19).

19. Bloc d'instruments suivant au moins l'une des revendications précédentes, **caractérisé en ce que** le cercle d'écran (38 - 42) est fabriqué en métal.

20. Bloc d'instruments suivant au moins l'une des revendications précédentes, **caractérisé en ce que** le cercle d'écran (38 - 42) est fabriqué en matière synthétique.

21. Bloc d'instruments suivant au moins l'une des revendications précédentes, **caractérisé en ce que** le cercle d'écran (38 - 42) est fabriqué en matière synthétique avec une surface métallisée ou laquée.

22. Bloc d'instruments suivant au moins l'une des revendications précédentes, **caractérisé en ce que** les cercles d'écran (38 - 42) délimitant respectivement les creux (12, 16) sont reliés les uns aux autres, par exemple par des nervures.

23. Bloc d'instruments suivant au moins l'une des revendications précédentes, **caractérisé en ce qu'**une plaque optique (10) pourvue de sources de lumière (lampe à incandescence 7) ou contiguë à des guides de lumière (14) est disposée derrière un cadran (15) translucide disposé dans le cadre avant (1).

24. Bloc d'instruments suivant au moins l'une des revendications précédentes, **caractérisé en ce que** la paroi du cadre avant (1) présente une épaisseur de paroi variable.

25. Bloc d'instruments suivant au moins l'une des revendications précédentes, **caractérisé en ce que** le cadran (8) et/ou le cadre avant (1) comporte un creux (22) pour un écran d'affichage plat (20), par exemple un affichage par cristaux liquides (LCD).

26. Bloc d'instruments avec une paroi de fond suivant au moins l'une des revendications précédentes, **caractérisé en ce que** la platine (2) est serrée entre le cadre avant (1) et une paroi de fond (3).

27. Bloc d'instruments suivant la revendication 25, **caractérisé en ce que** le cadre avant (1) est assemblé à la paroi de fond (3) au moyen d'un assemblage clippé (27).

28. Bloc d'instruments suivant au moins l'une des revendications précédentes, **caractérisé en ce que** la platine (2) est en outre appliquée sur des pièces d'écartement du cadre avant (1).

29. Bloc d'instruments suivant au moins l'une des revendications précédentes, **caractérisé en ce que** les instruments d'affichage (11) présentent des systèmes d'entraînement d'aiguille (5, 5a, 5b) et des aiguilles (9, 9a).
